# EUROPEAN PATENT APPLICATION

(11) **EP 4 163 748 A1**
(43) Date of publication of application: **12.04.2023**
(21) Application number: 22199228.2
(22) Date of filing: 30.09.2022
(51) Int. Cl.: G05B 19/418

(54) **METHOD OF AUTOMATING QUALITY CONTROL PROCESSES IN THE MANUFACTURING SECTOR**

(30) Priority: 07.10.2021 IT 202100025502
(71) Applicant: Innoida S.r.l., 80038 Pomigliano d'Arco (NA) (IT)
(72) Inventor: BELLUCCI, Marco, Napoli (IT); ZINNO, Antonio Maria, Eboli (SA) (IT)
(74) Representative: Bruni, Giovanni

(57) **Abstract**

The present invention teaches a quality control method which is based on a methodological flow which, in the face of the acquisition in a digital format, of the image of a piece whose presence of defects is to be analyzed, comprises some steps performed, as well as by a human operator, also by a program designed to automatically analyze said image.

The peculiarity is in the fact that the analysis of the images performed by computer (i.e., through an appropriate program), in turn, operates through processing of the acquired image, which are performed using a "neural network".

In an initial phase, the "neural network" is not trained, and therefore is not able to produce results that correctly interpret the images, identifying the possible presence of defects. In this first phase, the operator's judgments are essential for the purposes of characterizing the present invention, and achieve the purpose of creating a training sample for automatic analysis tools, such as "neural networks". The construction of such a training sample does not require the QC operator to do any additional work, and the training algorithms can be activated while the operator is at work, since each individual image produces training samples, which can be used both for actual training and for the validation of the training achieved.

At the basis of the invention there is the choice to use analysis tools based on "neural networks". This tool, to automatically carry out its analyzes on the various artifacts that must be checked from time to time, does not require programming, but training.

The invention is based on the intuition that the normal work performed by QC operators, in cases where an automated control system ready to be used is not available, can be exploited to provide for the training of a "neural" network".

## Description

### Technical Sector of the Invention

The present invention finds its application in the manufacturing field, and addresses the need to optimize quality control processes, especially in production contexts characterized by a significant variety of productions.
In such cases, companies normally do not make the investments which are necessary for the development of programs and systems that are used to perform automatically the necessary checks. In fact, the types of defective that should lead to discard an item can be too much diversified, and the costs to develop or update the control applications should be too frequent; thus, in the actual situation, the quality control that is put in practice today, in a large number of cases, is based checksw, carried out by an operator, piece by piece.

### Known Art

In order to illustrate some typical characteristics of the quality control processes, and above all the characteristics that make it difficult to be strongly automate them, reference will ideally be made to the methods for detecting aesthetic defects due to the surface processing of generic products. However, the process described can be adapted to all cases in which manufacturing defects, or production anomalies, can be found through the visual check of the product to be checked. Ovviamente i requisiti di qualità associati a questo genere di lavorazioni possono essere molto diversi da caso a caso, dato che la qualità estetica delle finiture riveste diversa importanza a seconda dello specifico prodotto

Obviously, the quality requirements associated with this kind of processing can be very different from case to case, given that the aesthetic quality of such finishes has different importance depending on the specific product.

For example, we will take a case with fairly stringent quality requirements, that is, the case in which the goal is to identify all the pieces that have some defect, also considering the presence of relatively small defects.

In the case of a company that does not have suitable tools to automatically perform the quality control (QC), the operational phases of the QC process are carried out by an operator substantially dedicated to viewing all the pieces manufactured; the operator checks them one by one, and, whenever he finds a non-conforming part, he isolates it.

At this point, two alternative ways can be adopted: in the simplest case the defective piece is simply eliminated; in other cases, more virtuous, however, the defect is recognized and cataloged for subsequent analysis, aimed at improving the production process, or at the recovery of the discarded piece by repairing the anomaly found.

For example, if the processing concerns the surface of a panel to be used for the manufacture of a piece of furniture, the defect could be a scratch or a dent (defects attributable to the handling of the object during processing), or the defect could consist in the presence of one or more stains, or in an uneven coloring (the latter defects, instead, could be attributable to the malfunctioning of some painting machinery).

In the event that the quality control provides for the cataloging of the defects found, then it is also useful to report the position and size of the defect.

Cataloging is therefore important, and useful, for the subsequent analysis of the defects found, to conceive measures to improve the production processes, and to reduce the percentages of waste.

The just reported very brief summary of the quality control process immediately highlights how difficult it is to define objective criteria when control processes of this type are put into practice. Certainly, the outcome of the checks carried out in this way does not produce very obvious errors (unless the operator is seriously negligent), however some potentially discardable pieces may fall within the discretion of the operator performing the check.

An objectivity of judgment is in any case to be counted among the objectives of any quality control process, and it can certainly be achieved more easily by resorting to QC processes performed automatically.

As noted above, the QC processes performed automatically are mainly adopted in the context of very stable productions, with large volumes of pieces, that is, in cases where the investment to automate the process pays off widely. Generally speaking, it should be noted that the automation of quality control can be set according to two different geneses.

The first genesis, is applied to those quality control processes that are conceived, right from the design and engineering phases of the product, to be carried out automatically; in this case many checks can be easily carried out automatically, typically by performing specific measurements (depending on the particular product considered) during the production process.

In other cases, however, the design and engineering phases of the product are not carried out paying particular attention to foreseeing the automation of quality control, and it is assumed that a significant part of the control procedures are, at least initially, performed by human operators.

In these cases, i.e., to automate a check initially thought to be performed by an operator, the approach adopted for the automation of the process follows a second genesis, which consists in making the machines do more or less what the operator essentially does. In other words, we do not think about redefining the control parameters, but we continue to base the control on the evidence that can be found by the human operator, therefore:
- since the operator must visually examine the artefact to be checked, the automatic system must include a subsystem for taking images;
- the automatic system, will then have to run a software of image recognition to detect manufacturing defects, simulating the operator's performance, and, again like the operator, will have to report the result of the examination performed in some computer report.

The choice of automating a quality control process, i.e., simulating the behavior of the human operator, after all, is an obligatory choice in many cases where the control through alternative processes would require rethinking the production process, and possibly make changes to the production machinery. Furthermore, it is a choice also favored by the fact that the known technique offers the tools to automatically perform the above operations.

However, there are some factors that prevent the spread (and fine-tuning) of automated processes implemented in this way, or at least make them impractical, in many cases.

If on the one hand the video shooting subsystem does not pose significant problems, and above all it can be used for a considerable variety of cases, on the other hand the development of the necessary programs for analyzing the acquired images poses several problems, and in some cases even risks not being feasible. The family of technologies that today appears to be the most suitable for conducting this kind of image analysis is based on the so-called "Deep Learning" and the use of so-called "Neural Networks".

"Neural Networks" are mathematical tools known for some time, widely studied as demonstrated by the large literature on the subject, and they are frequently used as "machine learning" tools for the automatic recognition and classification of images. Facial recognition is just one example of the many applications for which these "Neural Networks" are used.

It is also widely known that a training and subsequent validation process is required for the functioning of a "Neural Network". During the so-called training, a plurality of images of which the correct classification is already known is presented to the "Neural Network", in order to instruct, through examples, the network itself to associate the correct classification to each image.

However, it is clear that, where the task for which you want to train a "neural network" specifically requires to recognize details relating to a specific industrial component, such as, for example, production defects that can generally occur in a manufacturing context, the problem arises of having a sufficiently large number of images to train the "neural network".

In fact, in order to have a large number of different images relating to pieces produced by a specific industrial process, and in particular to have a large number of images relating to pieces with aesthetic defects or other types of non-conformities, it is necessary to have numerous pieces available already produced and, in particular, a high number of defective or non-compliant pieces. In industrial practice, this is evidently excessively expensive, both in terms of time and in terms of costs, and is one of the reasons why, in many cases, procedures are not adopted for the automatic analysis of the quality of pieces produced at industrial level.

Some real cases of practical applications demonstrate the technical feasibility of quality control processes, also applied to the case of checking for the presence of surface defects.

For example, [CN 111389741 A "Car brake pad surface defect detecting and automatic sorting system based on machine vision", Li Xiaoguang et al. - July 10, 2020] describes a quality control system for brake pads, based on image recognition techniques. The recognition of images in itself is not the object of the invention, as we assume known tools capable of recognizing particular types of defects. In this case, the use of automatic control tools is reasonable since the pieces to be examined are very many, they are relatively small in size and the possible defects are pre-classifiable. All these features make it possible to justify a non-negligible programming effort, as the benefit of an objective, fast and automatic control certainly compensates for the investments made, especially if the application is stable in the medium term.

In [WO 9428397 A1 "An authomatic inspection apparatus", Dalziel Marie Rosalie et al. - December 8, 1994] the solution specifically indicates how the inspections of artifacts are generally carried out on the basis of a training phase of the system in charge. The patent application is now out of date, and the problem of training a neural network is a problem that, today, can now be considered mastered by the state of the art.

In fact, the use of image analysis and recognition systems that do not require programming in the classical sense, but which exploit learning techniques to produce defect recognition programs, is an almost obligatory way to create today realistically usable systems.

After all, it is unsustainable to propose a system that requires heavy programming activities for each product to be controlled, especially if the manufacturing sector in which the solution is to be applied is characterized by a strong variety of productions. However, even in the state of the art, training cannot disregard a consistent set of training data, a constraint which precludes the use of such technologies for image analysis in all cases where, not only the productions are very varied, but they are also set to not very high numbers of pieces.

Therefore, at the state of the art, the problem of training a neural network to a specific task of recognition and classification of defects and anomalies present on pieces obtained through an industrial process is essentially unsolved, if we are looking for a solution that is technically and economically feasible.

In particular, the technical problem of training a neural network to a specific task of recognition and classification of defects and anomalies remains unsolved in the state of the art, if we want to obtain high performance even with a reduced number of pieces available, from which to acquire training images.

### Purpose and summary of the invention

The general purpose of the present invention is to indicate a methodology for objectifying the controls of quality and product non-conformity; this methodology implementing artificial intelligence tools such as "Neural Networks" and the like.

In particular, it is intended to indicate a methodology designed to implement quality controls carried out in an increasingly automatic manner.

Therefore, an intermediate object of the present invention is to provide a method for training a neural network for a specific task of recognizing and classifying defects present on pieces obtained by means of an industrial process; being said method able to overcome the limits associated with processes known at the state of the art and, in particular, able to obtain high performances in the recognition and classification of defects based on the number of pieces actually available, from which to acquire training images. The method must therefore be able to handle also the case in which the number of pieces actually available is quite small.

A further object of the present invention is to make the method transversal to a number of production sectors, and able to support the work of the operator in charge of product quality control (QC), allowing him to train the neural network during the current performance of his activities.

The aims established for this invention are achieved by resorting to a methodological workflow aimed at identifying non-conformities and aesthetic or functional defects of industrial products which can be found upon viewing. In other words, a real new quality control method is indicated, this method being inclusive of steps that lead to its automation.

The peculiarity of this quality control method consists in the fact that it is performed by an operator as occurs in many cases according to current practice; however, the operations performed by the operator are accompanied by other operations performed automatically, and the interaction between the operational flow performed by the operator, and the operational flow performed automatically does not require slowing down operations performed by the operator or adding elements of complexity to the operations themselves.

In summary, the quality control method is based on a methodological flow which, in the face of the acquisition, in a digital format, of the image of a piece, of which the eventual presence of defects is to be analyzed, includes a few steps, performed either by a human operator or by a program designed to automatically analyze said image, and the latter, in turn, operates by processing the acquired image using a "neural network". Among these methodological steps, the following must be considered essential:
✔ analysis of said image by said human operator, in order to identify the eventual presence of defects;
✔ analysis of said image, also by means of a program configured to automatically analyze said image in a digital format and to detect the presence or absence of defects;
✔ for each defect identified by said operator, said operator carries out the following operations:
   - he delimits, through an appropriate graphic interface, a region, or a cutout, of the image in which this defect is present,
   - again, through an appropriate interface, he assigns to the identified defect a label indicating the type of defect, selecting it from a predetermined list of possible defects,
      - and, if said identified defect is not present in said predetermined list, the operator updates said list by adding this new type of defect, as soon as it is found;
✔ for each defect whose presence is detected by said program designed to automatically analyze said image, said program is configured to perform the following operations:
   - delimiting the region, or a cutout, of the image in which this defect is present,
   - classifying the type of defect identified, giving it a label selected from the predetermined list of possible defects, this list being the same used by the operator who performs the analysis of the same image;
✔ subdivision of said image, by said program, into one or more cutouts, so that:
   - if said image contains one or more defects detected by the operator or by the automatic analysis, the cutouts of the figure that contain the defects detected by the operator or by the automatic analysis are labeled with the two labels assigned by the two analyzes, and, if only one of the two analyzes detected the presence of a defect, the double labeling will include a label indicating the absence of defects and a label corresponding to the defect identified, it being possible to identify which label has been attributed by the operator's analysis and which label is been attributed by the automatic analysis, while all other image cutouts, which do not contain any defect, are classified with a label indicating the absence of defects;
   - if said image does not contain defects, all the cutouts are classified with a label indicating the absence of defects, or with two labels, both indicating the absence of defects, and corresponding respectively to the automatic analysis and operator analysis.

The methodological steps indicated as essential for the purposes of characterizing the present invention achieve the purpose of constructing a training sample for a tool of automatic image analysis, belonging to the family of "neural networks", understood broadly.

In addition, the construction of this training sample does not require the operator who performs quality controls to do any additional work. Indeed, the interface made available by the digital image acquisition system, if anything, facilitates the operator's task to classify and locate the individual defects that he detects.

Finally, the training algorithms can be activated while the operator is at work, since each single image produces training samples that can be used both for actual training and for the validation of the training achieved.

This invention also has further advantages, which will become more evident from the following description, which illustrates further details of the invention itself through some embodiments and from the attached claims, which form an integral part of the present description.

### Detailed description

At the basis of the invention is the choice to use analysis tools based on "neural networks". These tools, to automatically carry out its analyzes on the various artifacts that must be checked from time to time, do not require programming, but training.

The invention is based on the intuition that the normal job carried out by QC operators, in cases where an automated control system ready to be used is not available, can be exploited to provide for the training of a "neural network".

The invention also introduces another methodological innovation in the learning process: in fact, the classic training of neural networks provides for having a very large training set which must also be divided into two subsets to be used with different functions, while the method according to the teachings of the invention differently exploits the learning data produced by the operator's work, and ultimately requires fewer sample cases to support satisfactory training.

According to the known practice, a "neural network" to be trained is subjected to suitable learning algorithms which optimize its parameters so that the network produces results similar to those of the samples belonging to a first subset of training data; after which a second subset of training data is used to validate, i.e., to measure, the level of learning achieved. Only if the network behaves correctly even when it is applied on verification data, belonging to the subset of validation samples, different from those used for training, it is possible to reasonably affirm that the network is trained, and can also be used on new data.

The method according to the invention uses an image analysis program which produces its own conclusions on the basis of results provided by a "neural network" which, at least initially, is not yet trained. The images that are analyzed by this program are the same ones that are analyzed by a QC operator who, on the basis of his knowledge, evaluates the possible presence of defects on the artifacts he controls.

This program operates in parallel with the operator's operativity, therefore, each image relating to a sample of the product to be analyzed is actually firstly used as a verification sample.

This is because, the result of the automatic analysis of this sample, which in turn depends on the results of the "neural network" (which constitutes the decision-making engine of this program), is compared with the classifications produced by the Qc operator. Each sample is therefore used, in fact, in the first place, as a validation sample.

In a second step, given that presumably the "neural network", at least initially, is not trained, and therefore it is necessary to continue with the training, the various samples acquired (corresponding to the decisions of the operator who carries out the quality control) are used to enrich the training set with additional samples.

By having a training data set, in which each image, or each image cutout, is associated with a label (i.e., a label that indicates "absence of defect", or identifies a "type of defect"), the training of the "neural network" can be put into practice, and conducted using an appropriate learning algorithm, generally different from case to case, depending on the "neural network" model that is adopted.

It should be noted that the starting samples produced by the normal operation of the operator who performs the quality control are first used as test samples, and then, they are transformed into training samples for the "neural network", after being suitably formatted, subdividing the image acquired in smaller images, i.e., cutouts, which represent smaller and more detailed regions (even relatively small in size) of the overall initial image.

In this regard, it should be noted that it is not possible to exclude the case in which it is not convenient (or significant) to divide the complete image of the artefact under examination into cutouts. This occurrence can happen when the defect is large to the point of substantially occupying the entire article, or when the article is already a very small piece. Therefore, the methodology must also provide for the limiting case in which the subdivision of the starting image into cutouts produces a single cutout that coincides with the starting image in its entirety.

In general, however, the subdivision of the images of the pieces to be checked into cutouts allows you to build a more homogeneous and effective training sample. In fact, the images either do not contain defects, or contain a well-framed defect in the image to be analyzed. Generally (excluding borderline cases) they are smaller and simpler images, and refer to details of the object to be checked, not to the object in its entirety. As already mentioned, some of these details, depicted in the individual cutout, are free from visible defects, other parts of the artefact, on the other hand, correspond to the areas where there is a defect, and this always occupies a significant part of a cutout of the image, therefore the defect is generally evident because the sample image (i.e., the cutout) substantially frames this defect.

Once the operator has framed the defect, the image subdivision criteria can be automated by following various heuristic rules, starting from the area with which the defect was originally confined by the operator through an appropriate interface.

In some cases, where the defect is very extensive; consider the example of a long scratch on a surface that must have a homogeneous finish; this, for convenience, can be framed in a set of adjacent cutouts in which the acquired image is subdivided, and each of these cutouts can be classified with a label corresponding to the defect "scratch", or "scratch segment".

Another interesting feature of the sample thus created is given by the fact that the overall sample is, in general, more numerous than a sample built directly with the overall images of the artefact; this is evident as each image is divided into a plurality of smaller images (i.e., the cutouts of the original image).

Typically, the training sets thus created include a large number of samples corresponding to images (i.e., portions of the original acquired images) whose labeling corresponds to the absence of defects. After all, in a typical manufacturing context, it is expected that defects are not too frequent and, where present, they affect only a part of the product, while most of the product should be without defects. In this way the "neural network" is well trained (because many samples of this type are available) to recognize all cases of absence of defects, classifying them all in the same way, distinguishing them from particular cases in which, in a certain region of the manufactured there is an anomaly that must be classified differently, i.e., with a label relating to a defect, and which involves isolating the piece with this anomaly (or defect).

In summary, the training data are created and used in an extremely innovative way, as they are formalized in such a way as to increase their number and their representativeness (with respect to what is sought, i.e., the presence or absence of anomalies), and since they are used both for testing and for actual training.

This methodological flow is able to be implemented into physical devices that represent an aid system for the QC of pieces produced by an industrial process.

Through this system, therefore, it is possible to conduct an automated detection of defects; and this system, after the phase of training of the "neural network", can theoretically conduct the aforementioned checks even without the need for an operator.

In fact, the operator is required to carry out the checks by analyzing the individual pieces distinguishing them between the good ones and those to be rejected until the automatic analysis program, which is based on the results of a "neural network", produces results that differ from those of the operator. However, as the network is trained, the precision of the automatic results increases (and this precision can be objectively evaluated, in the test of facts), until, at some point, the program can be made to work by itself, because it has been proved that it is able to produce always correct decisions.

In a particularly interesting form of implementation of the methodology according to the invention, the management of some borderline cases is also envisaged. In fact, it has been said that the operator's judgment is not necessarily objective in an absolute sense, and there may be some cases, when the "neural network" is already almost trained, in which there is a different outcome between the operator's evaluation and the result of the analysis program.

If this difference in the outcome occurs in the face of a minor imperfection, such that the decision whether to reject the piece or classify it as good is uncertain even for the operator, it is possible to envisage a review of the case, in so as to handle it appropriately also with respect to the use of that case, to consider it, or not, in the sample set to be used for learning.

A possible treatment of this case could simply consist in discarding the sample referring to this defect, because it could contribute to an hyper-sensitization of the "neural network" which does not help to establish clear learning criteria. Another form of data processing could instead consist in an afterthought by the operator (who could change his judgment, recognizing, in his assessment, a different treatment compared to previously analyzed cases). Or, the case could be handled like any other, and the "neural network" will correct its parameters taking into account even such controversial cases.

In another particularly interesting embodiment, the methodology according to the invention is expected to be carried out by combining the control performed by the operator with a plurality of automatic controls, performed by different programs each based on a different "neural network", and not limiting the methodology to the use of a single automatic analysis program, based on a single specific type of "neural network".

The sense of this way of proceeding is given by the fact that the results obtained through the training of "neural networks" are often surprising in a positive sense, and there are very numerous cases of application of the tool of "neural networks" in which these learn to make correct decisions with great reliability. However, such cases of positive functioning are unfortunately not the rule, and the training of a "neural network" does not always lead to the desired results; therefore, the system designer who intends to make use of this tool must intervene by changing the type of network used, or the architecture of the network, or even just its size. The experience gained in the application of "neural networks" is now quite consolidated, therefore, depending on the type of application and the size of the input data, it is possible to suggest the most suitable types of networks, as well as their architecture and size; however, also given the diversity of artifacts that theoretically can be controlled, and the variety of possible defects, it is not so obvious that there is only one type of "neural network" that can work well in all cases.

This potential problem can be solved by training a significant number of different "neural networks" simultaneously, then choosing the one that converges most quickly, and best, towards a satisfactory learning state.

The computing power, now available on relatively low-cost machines, combined with the efficiency of the learning algorithms that the prior art makes available, mean that the parallel training of many different "neural networks" is not a problem. Therefore, it is unrealistic to think of training in parallel a plurality of "neural networks" in the order of a dozen or a few dozen, on the contrary, the latter choice (i.e., training several "neural networks" at the same time) must undoubtedly be considered one of the preferred embodiments of the method according to the invention.

At this point it is useful to observe that the generation of an outcome through a simulation conducted with "neural networks" constitutes an extremely fast calculation process that can be performed in real time while the operator performs his visual inspections, so that the result of the automatic analysis can be compared in real time with the outcome of the inspections conducted by the operator.

The calculation process associated with the training of a "neural network", on the other hand, is an iterative process that can require processing times longer than the times required for inspections; if then you intend to train numerous networks in parallel and if you do not have particularly powerful calculation capabilities (which could unnecessarily increase the costs of the platform), the training typically does not take place in real time, i.e. the "neural network" is trained with a significant delay compared to the acquisition of the last training sample used, the order of magnitude of this delay can be quantified between tens of minutes and a few hours. However, the training of the "neural network"(s), while being conducted in parallel with the inspections by the operator, is a process that can also continue outside working time and produce suitably trained "neural networks" with some delay compared to the production of the training data.

This delay, however, is never excessive with respect to the purposes of the invention and, if on the one hand it precludes real-time training, it certainly does not create any problems in applying the platform for quality control, and in pursuing the purposes of the 'invention.

What matters is that, as soon as it is found that a learning process has led to the definition of a "neural network" that produces results aligned with those produced by the operator, the automatic analysis program is set up, starting from a certain moment onwards, to work autonomously, without the need to involve the operator further.

The method of carrying out quality control according to the teachings of the invention is a method whose application is, by its nature, transitory. In fact, the methodological innovation concerns the exploitation of a classic control with an operator in order to train a quality control program capable of operating autonomously and automatically. After that, the quality control takes place automatically, as happens in some well-known cases.

The difference lies in the fact that, while the known cases of application are applicable only to productions of many pieces, very repetitive and stable over the long term, the teachings of the invention allow the development of automatic analysis programs, even in production contexts that, following the known practice, they are exclusively managed with checks carried out by the operator, being in fact uneconomical to set up effective programs of automated analysis.

Even if the essential concepts that characterize the invention have already been substantially exposed, the main phases of the methodology according to the invention are retraced below, offering a further example of practical application of the methodology itself. The proposed example will allow you to appreciate both the effectiveness and the practical feasibility of the invention.

For each specific type of production whose quality control can take place through a visual inspection, a plurality of defect classes are defined (i.e. different types of defects that can be found in the pieces in question). Within the plurality of defect classes, the class labeled as "absence of defect" is also defined, to which the parts of the image that do not include defects will be associated. It is observed that this phase is essential, whether the quality control takes place by a QC operator, or whether it takes place automatically, therefore it is not an operation which involves an operational burden to implement the methodology according to the invention. Conveniently, these defect classes are created by the user by means of a special graphical user interface, and a unique alphanumeric label is associated with each defect class; conveniently, each label is then also associated with a display color which facilitates rapid identification.

As the operator begins quality control, the images of the individual pieces to be examined are acquired, so that the operator can also examine them on video and, using a special graphical interface, can define the dimensions of a grid which is used to divide each image into small rectangular cutouts. Preferably, the dimensions of the portions into which the image is divided by means of the grid are not identical for all images, but are optimized for each image according to the defects actually present, so that within each single cutout it falls exactly only one type of defect.

At this point the operator proceeds with the labeling of the so-called cutouts of the acquired image, assigning the correct label to the cutouts in which there is a defect, while in the cutouts corresponding to pieces of image in which there are no defects, the "absence of defect" label is automatically associated.

In this way, a set of data is obtained consisting of a plurality of pairs, each consisting of a rectangular image (corresponding to a cutout of a starting image) and a specific label which indicates the type of defect present in this image or, alternatively, the label indicative of "absence of defect".

It is clear that by operating in this way the number of cutouts (i.e., sample pairs made up of an image and a label) is much higher than the number of available starting images.

From this point on, it is possible to use the set of these sample pairs to train a "neural network" according to the standard use of this tool. In the present case, types of convolutional "neural networks" (CNN: Convolutional Neural Network) can be used, which are particularly suitable for image analysis applications.

We will not dwell, in the context of this exposition, on the methods of training a "neural network". In fact, training procedures are techniques widely known and consolidated for decades now. The only observation that is underlined, because it introduces an innovative use of the data produced by the operator for the creation of the training data, concerns the fact that, even before exploiting the information for the construction of the training data, the system that performs the automatic analysis (i.e. the automatic quality analysis program), which, as mentioned, is based on the use of a "neural network", is tested with the data that are gradually produced by the operator, even if the "neural network" ( which is the decision-making heart of this analysis system), at that particular moment, is not yet trained.

It is observed that this preliminary calculation, conducted through the not yet fully trained "neural network" does not involve significant computational burdens (if compared with the computational burdens required for training), but offers an opportunity for early testing, which allows to realize quickly when the program is near to be ready to operate autonomously.

In some forms of implementation, which can be implemented with flexibility, it is also possible to envisage a mixed operating phase, in which the operator continues to carry out his inspections but, aware of having an automatic program which is gradually refining its accuracy, he carries out a double check in cases where his judgment is different from the automatic result.

In particular, the first applications of the methodology in real manufacturing contexts have shown, as could be expected, that the learning process of many "neural networks" is gradual: they often learn quickly and with excellent reliability to recognize images with no defects, while the learning process to correctly classify the various defects generally requires a longer training.

This phenomenon is predictable as images with no defects are more frequent, while some specific types of defects are certainly rarer and therefore the learning process to recognize such defects is fatally slower.

However, the particular flow of the methodology according to the invention allows to advantageously exploit this gradualness in learning. In fact, it is possible to verify in real time (i.e., while the neural network is undergoing learning) when the network begins to function correctly to identify only the absence or presence of anomalies, regardless of whether it labels the anomalies correctly or not.

Therefore, as soon as it is deemed that the automatic analysis is sufficiently reliable in recognizing the pieces free from defects, it can be carried out autonomously, and the operator can be involved to complete the analysis by examining only the defective pieces, in order to correctly classify the detected defect.

In this way, the operator is quickly relieved of a considerable amount of work (because it has been seen that the learning process necessary to recognize the pieces without defects is fast); and above all he is relieved of the most boring and repetitive work, being engaged only in examining the pieces in which his specific competence is required. In the time that the operator saves, he can be more profitably engaged in carrying out other activities, which can be carried out in parallel.

### Variants and concluding remarks

In summary, the teachings of the present invention make it possible to satisfy the purposes for which it was conceived by exploiting in an unprecedented way at least three intuitions of technical content.
✔ The first intuition consists in recognizing that the result of a quality control performed by an operator, in addition to being exploited to manage the quality process, as such, can also be used to derive a training set for one or more "neural networks". Since it is possible to conduct such training even with continuously increasing training datasets; for which, potentially, the training iterations (known in jargon as training epochs) are conducted each time with increasingly numerous and increasingly significant data sets.
✔ The second intuition derives from the fact that the practical execution of the checks by the operator, being based on a digitally acquired image, means that he reports the conclusions of his analysis on this image, highlighting and labeling the anomalies he finds. This operator therefore also provides other useful information (on the position and size of the defects that can be visually observed) which allow the overall image of the examined artifact to be divided into particularly significant cutouts, very effective when training a "neural network".

This information makes it possible to achieve the creation, however easily automatable, of smaller (therefore easier to handle) and more numerous images, in which either there is no anomaly (hopefully the majority), or there is an anomaly, and it is particularly evident as it is well framed in the cutout. Therefore, the operator not only identifies the pieces to be isolated because they are defective, but, in carrying out his task, he also provides very important information for building a training sample with a particularly advantageous format.
✔ The third intuition consists in the fact that an image analysis program based on results produced by a "neural network" can be made to work even if the network is not trained and can always be executed in parallel with the operator's operation. So that, if the behavior of the program is not aligned with that of the operator (from which the network should learn), it simply means that the network is not yet satisfactorily trained. And since this form of testing occurs on data before it has been used to feed into the training set, evidently, it is a meaningful test.

The inventive activity associated with the aforementioned three intuitions consists in the fact that the taught methodology allows to implement an automatic quality control by visual inspection, in many cases in which this seems not actually possible or convenient, at least by relying on known methodologies.

It should be remembered that quality control processes in the manufacturing field are one of the most important industrial processes that concern this field, and the fact of being able to conveniently automate them is a significant advantage, which, up to now, has not been widely exploited. In fact, faced with the technical problems posed by the attempt to automate quality control processes (in particular controls based on visual inspection) many industry experts have given up.

This new quality control method actually solves various technical problems that pertain to manufacturing processes as a whole. In fact, automation makes it possible to speed up control times, to make controls objective, to work more efficiently and, ultimately, improves the general quality of manufacturing processes.

The method taught in the present invention can be implemented in multiple forms and variations, above all due to its intrinsic propensity to integrate with other business systems.

For example, the operator interface can be implemented in many ways but, presumably, in the preferred implementation forms, the method taught according to the invention may be closely integrated into corporate systems responsible for management control in a broad sense or, in general, in systems dedicated to monitoring manufacturing processes; in this case, the implementation of the methodology according to the invention can conveniently share the interfaces towards the operator and towards the other corporate IT tools.

The point of strength of the present invention is destined to maintain its distinctive relevance for a significant time to come, as it is based on some unpublished insights which allow data produced for other reasons to be exploited in a new way. And this innovative exploitation of information produces results not known in the state of the art, which can significantly improve the production processes of manufacturing companies.

Furthermore, the described invention is not limited to producing the classic outcome of quality control processes, in fact it provides the substantial and essential information to proceed with subsequent refinements of the production processes, because it produces a rich computerized database, descriptive of the production processes.

Such data (available encoded in a computer format) could also be used to indicate on which processes, or on which production processes, to intervene to improve production, perhaps drawing on solutions adopted in other apparently different processes, or carried out in other work centers: cases, the latter, in which the transfer of skills and experience is often slowed down.

Therefore, especially in the context of these evolutionary scenarios, the invention lends itself to incorporating and supporting further development and improvement efforts, capable of improving, or increasing, the performance of the invention as described in the light of current scenarios.

Therefore, further developments could be made by a man skilled in the art without thereby departing from the scope of the invention as it results from the present description and from the claims attached hereto which form an integral part of the present description; or, if said developments are not included in the present description, they may be the subject of further patent applications associated with the present invention, or dependent on it

## Claims

1. A quality control method aimed at identifying non-conformities and defects of aesthetic or functional type of industrial products that can be found on vision, in which said method consists in the fact that it includes operations carried out by a human operator, flanked by other operations carried out automatically, also including the following steps:
a. acquisition, in a digital format, of the image of a piece for which the eventual presence of defects is to be analyzed,
b. analysis of said image by said human operator, in order to identify the eventual presence of defects;
c. analysis of said image, also by means of a program configured to automatically analyze said image in a digital format and to detect the presence or absence of defects, in which this program, in turn, operates by processing the acquired image, by means of a "neural network";
d. for each defect identified by said operator, said operator carries out the following operations:
- he delimits, through an appropriate graphic interface, a region, or a cutout, of the image in which this defect is present,
- again through an appropriate interface, he assigns to the identified defect a label indicating the type of defect, selecting it from a predetermined list of possible defects;
e. for each defect whose presence is detected by said program designed to automatically analyze said image, said program is configured to perform the following operations:
- delimiting the region, or a cutout, of the image in which this defect is present,
- classifying the type of defect identified, giving it a label selected from the predetermined list of possible defects, this list being the same used by the operator who performs the analysis of the same image;
f. subdivision of said image, by said program, into one or more cutouts, so that:
- if said image does not contain defects, all the cutouts are classified with a label indicating the absence of defects,
- if said image contains one or more defects detected by the operator or by the automatic analysis, the cutouts of the figure that contain the defects detected by the operator or by the automatic analysis are labeled with the two labels assigned by the two analyzes, and, if only one of the two analyzes detected the presence of a defect, the double labeling will include a label indicating the absence of defects and a label corresponding to the defect identified, it being possible to identify which label has been attributed by the operator's analysis and which label is been attributed by the automatic analysis, while all other image cutouts, which do not contain any defect, are classified with a label indicating the absence of defects.

2. Quality control method according to claim 1 which also comprises a step of creating one training set for "neural networks", in which each sample comprises a pair of input-output information wherein:
- the input consists of an image cutout, created from the images acquired as indicated in point "a." of claim 1, and by means of the subsequent subdivision made as indicated in point "f." of claim 1, and
- the output consists of the label attributed by the operator as indicated in point "d." of claim 1, or a label indicating the absence of defects, in the event that the cutout considered was not selected by the operator because he did not find the presence of a visible defect.

3. Quality control method according to claim 1 wherein, if
- the analysis conducted by the operator, as indicated in point "b." of claim 1, and
- the analysis conducted by means of said program designed to automatically analyze said image in a digital format, as indicated in point "c." of claim 1,
provide different feedback regarding the presence of any defects, the operator repeats point "b." of claim 1, which consists in the repetition of the analysis of the same image, being able to either confirm the result provided following the first analysis, or modify this result.

4. Quality control method according to claim 2 wherein said one training set for "neural networks" is used to simultaneously train a plurality of "neural networks".
